(19) Europäisches Patentamt
European Patent Office
Office européen des brevets

(11) Publication number: **0 181 640**
**B1**

(12) **EUROPEAN PATENT SPECIFICATION**

(45) Date of publication of patent specification: **23.08.89**

(51) Int. Cl.$^4$: **C 08 G 61/08**

(21) Application number: **85114484.0**

(22) Date of filing: **14.11.85**

(54) **Copolymers of dicyclopentadiene.**

(30) Priority: **16.11.84 US 672301**
**16.11.84 US 672567**

(43) Date of publication of application:
**21.05.86 Bulletin 86/21**

(45) Publication of the grant of the patent:
**23.08.89 Bulletin 89/34**

(84) Designated Contracting States:
**BE DE FR GB IT NL SE**

(56) References cited:
**DE-A-2 444 681**
**US-A-4 080 491**

(73) Proprietor: **HERCULES INCORPORATED**
**Hercules Plaza**
**Wilmington Delaware 19894 (US)**

(72) Inventor: **Klosiewicz, Daniel William**
**213 Sheldon Drive Drummond Hill Apts.**
**Newark, Del. 19711 (US)**
Inventor: **Nahm, Steven Harold**
**2116 Ferguson Drive**
**Wilmington, Del. 19808 (US)**

(74) Representative: **Lederer, Franz, Dr. et al**
**Van der Werth, Lederer & Riederer**
**Patentanwälte Lucile-Grahn-Strasse 22**
**D-8000 München 80 (DE)**

EP 0 181 640 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the bulk polymerization with a metathesis-catalyst system of purified dicyclopentadiene and to thermoset, substantially cross-linked polymeric compositions that include at least about 50 percent by weight of polymerized units of dicyclopentadiene.

Unless otherwise specified, the term "norbornene-type" is used to mean a cycloolefin having a strained five-membered ring structure, such as that of norbornene or dicyclopentadiene.

U.S. Patent 4,002,815 discloses a solution-polymerization method that employs a dialkylaluminum iodide, an alkylaluminum diiodide or a mixture of trialkylaluminum compounds with elemental iodine to make copolymers of cyclopentene and dicyclopentadiene that are soluble in common solvents such as gasoline, naphtha, chlorinated hydrocarbons, and aromatics. U.S. Patent 3,557,072 discloses the preparation of norbornene-type cycloolefin plastomers derived from dimethanooctahydronaphthalene (referred to as "DMON"). U.S. Patent 4,426,502 discloses a bulk polymerization process for cyclic olefins containing the norbornene group, by a process using a metathesis-catalyst system in a reactive mixture or reaction injection molding system. Modification of the co-catalyst with an alkoxy group to extend the polymerization time is also disclosed.

U.S. Patent No. 4,400,340 discloses a method for making a thermoset cross-linked poly(dicyclopentadiene) by a reaction injection molding process (sometimes hereinafter referred to as an RIM process), and using a metathesis-catalyst system. The RIM procss involves the mixing of two or more low viscosity reactive streams, which are then injected into a mold where they quickly set up into a solid infusible mass.

The patent discloses one reactant stream containing the catalyst of the metathesis-catalyst system, such as a tungsten halide or tungsten oxyhalide, and another reactant stream containing the activator (cocatalyst) of the metathesis-catalyst system, such as an alkylaluminum halide, at least one reactant stream containing dicyclopentadiene. The tungsten containing catalyst is preferably $WCl_6$ or $WOCl_4$. The alkylaluminum compound can be a trialkylaluminum, an alkylaluminum dihalide or a dialkylaluminum halide, in which the alkyl group contains one to ten carbon atoms, or a mixture thereof.

Other U.S. Patents that disclose the use of a two-part metathesis-catalyst to produce thermoset dicyclopentadiene homopolymer and copolymers of dicyclopentadiene with cyclopentene, having high impact strength and high modulus, are 4,469,809, 4,481,344, and 4,485,208. U.S. Patents 4,436,858 and 4,485,208 describe the use of ester plasticizers, such as diester and glyceride plasticizers to increase impact strength, and the latter also discloses the incorporation of up to about 10% of another monomer such as norbornene.

The thermoset polymeric products are insoluble in common solvents such as gasoline, naphtha, chlorinated hydrocarbons, and aromatics, have high impact strength, and have a low tendency to flow at elevated temperatures. They can be easily synthesized and formed by the RIM process.

For the RIM system to be effective, certain requirements must be met: 1) the individual streams must be stable and must have a reasonable shelf-life under ambient conditions; 2) it must be possible to mix the streams thoroughly without their setting up in the mixing head; and 3) when injected into the mold, the materials must set up to a solid system rapidly.

The tungsten-containing catalyst used in these known metathesis-catalyst polymerizations is preferably in solution with dicyclopentadiene monomer. Because the tungsten compound, if unmodified, will rapidly polymerize the monomer, the tungsten compound should first be suspended in a small amount of a suitable solvent. The solvent must not be susceptible to reacting with the tungsten compound. For instance, where a tungsten halide is employed the solvent must not be susceptible to halogenation. Examples of preferred solvents are benzene, toluene, xylene, chlorobenzene, dichlorobenzene, and trichlorobenzene. Sufficient solvent should be added so that the tungsten compound concentration is between about 0.1 and 1.0 mole per liter of solution.

The activator also is preferably in solution with dicyclopentadiene monomer.

Dicyclopentadiene that is commercially available is *endo*-DCPD (3a,4,7,7a tetrahydro-4,7-methanolH-indene). The *exo*-isomer, while not commercially available, can be used just as well. The highest purity available in a commercial grade of monomer, 97% by weight dicyclopentadiene, is unacceptable for polymerization without purification. Commercially available material should be purified in order to prevent impurities from inhibiting the polymerization. The low boiling fraction should be removed. This can be done by stripping away several percent of the unsaturated four to six carbon atom volatiles, i.e., the volatiles distilled below 100°C at about 90 $\pm$ 3 torr absolute pressure. It is often desirable to purify the starting material even further by treatment with an absorbent such as molecular sieves, alumina or silica gel. Because the presence of water interferes with polymerization (by hydrolysis of both the catalyst and the activator components of the catalyst system), the water content of the starting material should be below about 100 ppm. Water can be removed by azeotropic distillation under reduced pressure.

The published patents, particularly the previously-mentioned U.S. Patent No. 4,400,340, disclose that when the catalyst system's components are combined, the resulting ratio of cycloolefin (for example dicyclopentadiene) to tungsten compound should be from about 500:1 to about 15,000:1 on a molar basis, preferably 2,000:1, and the dicyclopentadiene to alkylaluminum ratio should be from about 100:1 to about 2000:1 on a molar basis, preferably about 200:1 to about 500:1.

In a preferred combination according to the published patents, sufficient dicyclopentadiene is added to

a 0.5 molar tungsten containing catalyst solution prepared as described above, so that the final tungsten compound concentration is 0.007 molar. This corresponds to a dicyclopentadiene to tungsten compound ratio of 1000:1. Sufficient dicyclopentadiene is added to the diethylaluminum chloride ($Et_2AlCl$) solution, prepared as described above, to produce an alkylaluminum concentration of 0.048 M. This corresponds to a dicyclopentadiene to alkylaluminum ratio of 150:1. If these two streams are mixed in a 1:1 ratio, the final ratio of dicyclopentadiene to tungsten compound will be 2000:1, the final ratio of dicyclopentadiene to alkylaluminum will be 300:1 and the final ratio of tungsten compound to alkylaluminum will be about 1:7.

To prevent premature polymerization of the tungsten compound/monomer solutions used in these known metathesis-catalyst systems (which would otherwise occur within a matter of hours) from about 1 to about 5 moles of a Lewis base or a chelating agent can be added per mole of tungsten compound. Preferred chelating agents include acetylacetones and alkyl acetoacetates, where the alkyl group contains from one to ten carbon atoms. Preferred Lewis bases are nitriles and ethers such as benzonitrile and tetrahydrofuran. The improvement in the stability and shelf-life of the tungsten compound/monomer solution is obtained whether the complexing agent is added before or after the phenolic compound. When purified cycloolefin, for example dicyclopentadiene, is added to this catalyst solution it forms a solution that is stable and has a shelf-life of several months.

The US-PS 4 080 491 discloses a process of producing ring-opening polymerisation products. It is described to use a catalyst system prepared from an organometallic compound and the reaction product of tungsten oxide or molybdenum oxide and a phosphorus compound for the production of soluble non crosslinked thermoplastic polymeric material. Said process is, however, not applicable to thermoset materials as used in the RIM process.

In these known metathesis-catalyst systems, the induction time is the period of time between mixing of catalyst, activator and monomer, and the exotherm that indicates the onset of exothermic polymerization. If an unmodified activator/monomer solution is mixed with the catalyst/monomer solution, the polymerization will initiate spontaneously and instantaneously, causing the polymer to set up in the mixing head. The onset of polymerization can be delayed by adding a reaction rate moderator to the activator/monomer solution.

According to prior patents, the polymerization of the cycloolefin is substantially complete in from 15 seconds to about 7.5 minutes. Normally, the polymerization is shown to be substantially complete in from about 30 seconds to about 75 seconds.

Ethers, esters, ketones, and nitriles are known to act as moderators for the alkylaluminum compounds. Ethyl benzoate, butyl ether, and bis(2-methoxyethyl) ether are known to be preferred. The induction time is controlled by varying the specific amount of rate moderator used. The preferred ratio of the alkylaluminum to moderator is given as being from about 1:1.5 to about 1:5 on a molar basis.

The induction time is also temperature dependent. As the temperature at which the reaction is carried out is increased the induction time decreases. Consequently, to keep the induction time controlled at a higher reaction temperature a less active formulation of the metathesis catalyst system should be used, for instance, by choosing an appropriate moderator.

One disadvantage in using one of the known moderators is the possibility that the moderator will diffuse out of the polymer after polymerization, causing a coating or "bloom" on the surface of the molded article, and interfering with adherence of paint. Surprisingly, considering the hydrophobic, non-polar nature of the polymer, paintability is excellent if this blooming is avoided.

It would therefore be desirable to incorporate the rate-modifying entity into the polymer so as to avoid the possibility of "blooming", and to ensure that copolymers of DCPD and norbornene esters, without the addition of one of the non-cycloolefin rate moderators of the prior art, may be polymerized consistently in from about one minute to two and a quarter minutes.

The thermoset cross-linked poly(dicyclopentadiene) made by the method disclosed in U.S. Patent No. 4,400,340 has high impact strength, high modulus, and a high degree of creep resistance that gives it load-bearing capability for many applications. Heat sag values, which are important for automotive applications, average about 15 mm parallel to the flow direction and 23 mm perpendicular to flow in material containing 20% of milled glass fibers. Coefficients of linear expansion are similar to those of other plastics.

However, the glass transition temperature (Tg) of the polymer is normally below 120°C and may be as low as about 90°C. Thus it can begin to soften at about 80—85°C, and cannot be used at temperatures much above about 75°C. (The glass transition temperature of a polymer is defined as the temperature at which the modulus of the polymer decreases very rapidly as the polymer undergoes a transition from the glassy state to the rubbery state.)

In addition to increasing the induction time and avoiding blooming of the moderator, it would also be desirable to modify the structure of those thermoset polymeric products so that they would retain their properties at temperatures near 100°C, for instance for applications where the molded object must be painted and the paint must be baked after application in an oven, or for applications where the molded object must be heated to post-cure the polymer.

According to the invention, a reactant composition containing a dicyclopentadiene monomer and a metathesis-catalyst system for polymerizing norbornene-type cycloolefins that includes a monomer-soluble or solvent-soluble tungsten compound as the catalyst and a dialkylaluminum compound as the activator, is characterized in that it comprises at least about 5% by weight of a norbornene-type cycloolefin

comonomer that in its polymeric state would have a glass transition temperature (Tg) that is higher than the Tg of the dicyclopentadiene homopolymer after the polymerization, or that has two or more reactive double bonds that will open during the polymerization, so that the number of cross-links will be increased, or that contains four or more rings in the monomer structure, or that has a polar substituent in the five-position of the norbornene structure, the substituent being a pendant group that contains one or more hetero-atoms, the remainder of the cycloolefin monomer being nonpolar.

When the reactant composition according to the invention is polymerized, the glass transition temperature of the polymer product is raised by the incorporation of comonomers that in their polymeric state would have a Tg that is higher than the Tg of the dicyclopentadiene homopolymer.

The enhancement of the Tg value may be proportionately greater or less than would be indicated by the difference between the Tg of DCPD and that of the comonomer. The presence of a polar substituent in the comonomer also will have a Tg-enhancing effect.

The glass transition temperature of the polymer product is also raised if the comonomers in the reactant composition have two or more reactive double bonds that will open during the polymerization and increase the number of cross-links, such as trimethylolpropane-tris-(5-norbornene-2-carboxylate) (TPNC). Comonomers that contain four or more rings in the monomer structure, such as 1,4,5,8-Dimethano-1,4,4a,5,8,8a-octahydronaphthalene (DMON) increase the rigidity of the backbone chain of the polymer and its resistance to folding or rotation, and thus also raise the Tg of the polymer.

Preferably, pendant polar functional groups in the norbornene-type cycloolefins are defined as an esterified hydroxyl or carboxyl group (—OCOR or —COOR), a halogen atom, or a nitrile group (CN) as a substituent in the five position of the norbornene structure or pendant to that five-position through an alkylene radical preferably, methylene, and optionally with an alkyl group containing, say, one to six carbon atoms, as a cosubstituent in the five-position. Most preferably the polar norbornene-type cycloolefins are the esters, particularly those that link two or more norbornene ring structures.

For example, substantial increases in the cross-link density (as measured by the degree of swelling of the copolymers) are obtained with the 2:1 or 3:1 Diels-Alder adducts of cyclopentadiene with polyfunctional acrylates, such as, for example, trimethylolpropane triacrylate (which is a 3:1 adduct); ethylene glycol diacrylate, ethylene glycol dimethacrylate, 1,4-butanediol dimethacrylate and 1,4-butanediol diacrylate (which are 2:1 adducts); and the 2:1 adduct of cyclopentadiene with diallyl adipate.

Preferably the norbornene-type cycloolefin comonomer is present in concentrations of from about 1 to 30% by weight. Most preferably the comonomer is from about 10 to 25% by weight. The preferred amount is entirely a matter of choice, depending on the Tg of the copolymer, its polar character if any, the amount of Tg enhancement desired, the Tg of the primary monomer, and any degree of Tg enhancement effect previously-determined to be likely.

The product density of the compositions may vary from about 1.2 g/ml with some filler to about 0.04 g/ml.

The cross-link density of a polymer may be determined by swelling the sample in a suitable solvent and then drying it. The average molecular weight between cross-links can be calculated from the amount the polymer swells by a known equation based on the "Rubber Elasticity Theory", or by a conventional dynamic mechanical analysis from the storage modulus (G') above the sample's Tg. The more highly cross-linked a polymer is, the less it will swell relative to another sample of a similar polymer in the same solvent.

Poly (dicyclopentadiene) formed by ring-opening polymerization in RIM has been found by swelling experiments, and by dynamic mechanical experiments, to have approximately one cross-link for every seven repeat units in the polymer chain.

As used herein, unless otherwise specified, percentage of materials are in percent by weight and "solvent" means a fluid in which the monomer or catalyst is readily soluble.

A preferred reactant solution is comprised of dicyclopentadiene; a polar norbornene-type cycloolefin ester such as the Diels-Alder adducts of cyclopentadiene with trimethylolpropane triacrylate, ethylene glycol diacrylate, or ethylene glycol dimethacrylate; and trialkylaluminum in a dicyclopentadiene-to-trialkylaluminum molar ratio of about 80:1 to about 1300:1, more preferably about 200:1 to about 500:1. The preferred trialkylaluminum is tri-n-octyl aluminum.

When a non-polar Tg-enhancing comonomer is used with a non-monomeric moderator such as, and preferably bis(2-methoxyethyl) ether, for maximum effectiveness the moderator is added to the combination of monomers before the trialkylaluminum is added, preferably in a molar ratio of trialkylaluminum to bis(2-methoxyethyl) ether of at least 1:0.5, more preferably of about 1:1 to about 1:4.

The preferred catalyst composition is prepared by controlled addition of an oxygen donor to $WCl_6$, and is a mixture of from about 10 to 75 mole percent $WOCl_4$ and about 25 to 90 mole percent $WCl_6$. The oxygen donor can be wet $N_2$ gas, a hydrated inorganic salt, such as $FeSO_4 . 7H_2O$ or t-butanol. The preferred proportion of oxygen donor is about 0.25 mole per mole of tungsten.

Some polar functional groups, such as esters of carboxylic acids, can react slowly with trialkylaluminum compounds to give products that are not effective as catalyst activators. Therefore, if a trialkylaluminum compound is used as or in the activator, polar comonomers should either be included only in the part of the reactant composition containing the catalyst, or else added to the solution of activator and moderator in non-polar monomer immediately prior to polymerization.

A phenolic compound and acetylacetone (acac) are added to solubilize and stabilize respectively the system in cycloolefin. Catalyst prepared in this fashion is effective in polymerization of cycloolefins such as DCPD at a cycloolefin to catalyst ratio of as high as 14000:1.

Preferably the cycloolefin reactive composition used in the process according to the invention includes at least 50 percent by weight of DCPD and more preferably 80 percent by weight.

Dicyclopentadiene monomer that is ninety-seven percent by weight pure DCPD, the purest commercial grade, can be made acceptable for RIM use by distillation. For example, a column packed with 1-inch Intalox Saddles provides dicyclopentadiene purification with recovery of purified dicyclopentadiene of about 70—75% because the relative volatilities of some of the polymerization inhibitors appear to be very close to that of dicyclopentadiene.

Although polymerization inhibitors in crude dicyclopentadiene are still not fully identified, suspected contaminants are polar compounds such as epoxides, alcohols, aldehydes, and some other oxygen-containing compounds. Oxygenated compounds have generally intermediate or high polarity and are adsorbed on alumina or in zeolites.

The major volatile impurities in the 97% pure commercial dicyclopentadiene are isoprene and cis/trans 1,3-pentadiene, which do not affect the polymerization, but are undesirable for a reaction injection molding process. The volatile compounds can be removed simply by stripping. Preferably a dicyclopentadiene monomer using a metathesis-catalyst system that includes a monomer-soluble or solvent-soluble tungsten compound as the catalyst and an alkyl-aluminium compound as the activator, characterized in that the dicyclopentadiene is polymerized with at least about 5% by weight of a norbornene-type cycloolefin comonomer that has a polar substituent in the five-position of the norbornene structure, the substituent being a pendant group that contains one or more hetero-atoms, the polar comonomer being present in a concentration effective to increase the induction time before polymerization is used in a method of moderating the rate of polymerization.

The following examples illustrate the preparation of suitable comonomers.

Example 1
Preparation of Comonomers

1,4,5,8-Dimethano-1,4,4a,5,8,8a-hexahydronaphthalene (DMHN)

DMHN is prepared in Example 1 by reacting bicyclo[2.2.1]-2,5-heptadiene (norbornadiene) with cyclopentadiene, obtained by decomposition of DCPD under reaction conditions, according to reaction I as follows:

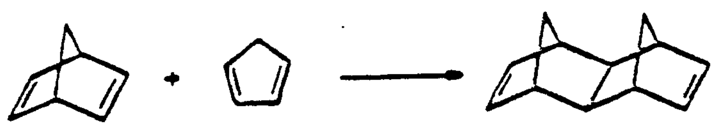

(I)

Norbornadiene (5.0 kg) was charged to a five gallon autoclave while maintaining an inert nitrogen atmosphere in the autoclave. DCPD (1.35 kg) was then charged to the reactor.

The reactor was then heated to 180°C over five hours while stirring, and then maintained at 180°C for sixteen hours. The reactor was then cooled to room temperature, after which the reactor was vented and opened and the contents of the reactor removed. The DMHN was purified by distillation in a packed column. Excess norbornadiene ($BP_{70}$ = 38°C) is removed first by distilling at a pressure of 70 torr (mm of mercury). DMHN ($BP_{10}$ = 90°C) is then purified by distilling at 10 torr to obtain 1.84 kg of product.

Example 2

Tricyclo [8.2.1.0]trideca-5,11-diene (TTD)

TTD is prepared Example 2 by reacting 1,5-cyclooctadiene with cyclopentadiene according to reaction II as follows:

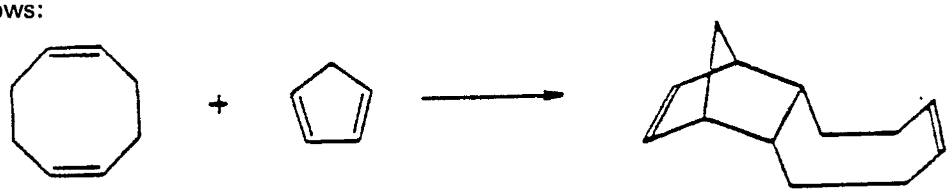

(II)

Dicyclopentadiene (50 grams) and 150 grams of 1,5-cyclooctadiene were added by cannula to a sparged "pop" bottle. The mixture was then heated to 190°C over 2 hours and then maintained at that temperature for 4 hours and then allowed to cool. TTD was purified by first distilling out excess 1,5-cyclooctadiene at a pressure of 5 torr and then distilling the TTD ($BP_{.05}$ = 80°C) at 0.05 torr to give 63 grams of product.

Example 3

Trimethylolpropane-tris-(5-norbornene-2-carboxylate) (TPNC)

TPNC is prepared by reacting trimethylolpropane triacrylate with cyclopentadiene according to reaction III as follows:

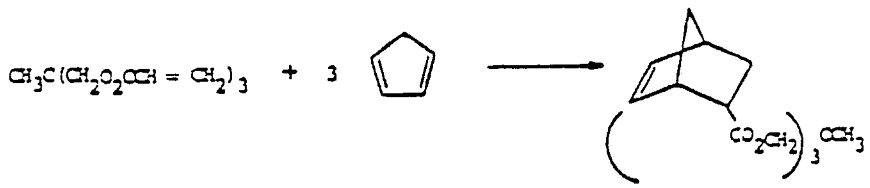

(III)

A solution of 14.8 grams of trimethylolpropane triacrylate in 150 ml of methylene chloride was sparged with nitrogen for 15 minutes. Cyclopentadiene (42.8 ml, 0.52 moles) was added in one portion by syringe, after which the mixture was heated to 40°C for 3 hours. After cooling, the methylene chloride and excess cyclopentadiene were removed by rotary evaporator and high vacuum to provide the product.

Example 4

Ethylene-bis-(5-norbornene-2-carboxylate) (ENC)

ENC is prepared by reacting ethylene glycol diacrylate with cyclopentadiene according to reaction IV as follows:

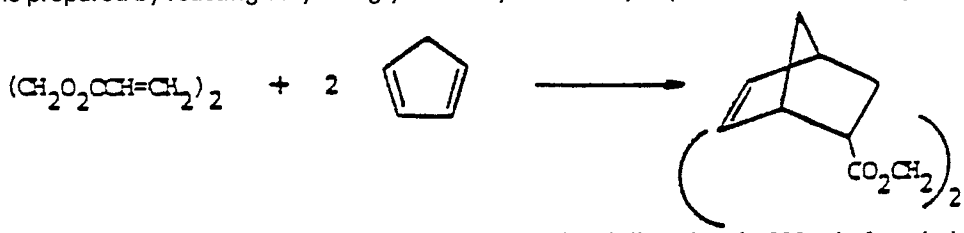

(IV)

A solution of 17.0 g (.100 moles) of distilled ethylene glycol diacrylate in 200 ml of methylene chloride was sparged with nitrogen in a .5 liter reactor. Cyclopentadiene (46 g, .70 moles) was added in one portion by syringe, after which the mixture was heated to 40°C for 4 hours under a nitrogen atmosphere. The mixture was then cooled, after which the methylene chloride and excess cyclopentadiene were removed with a rotary evaporator. The crude product was purified by chromatography on a column of 100 g of neutral alumina, eluting first with 1.5 liter of hexane and then with 4 liter of a 1:1 mixture of hexane and methylene chloride. The hexane/methylene chloride was then stripped to provide the pure ENC.

Example 5

Ethylene-bis-(2-methyl-5-norbornene-2-carboxylate (EMNC)

EMNC is prepared by first adding a solution of 21.0 g (0.200 moles) of methacryloyl chloride in 50 ml of ether to a solution of 26 g (0.39 moles) of cyclopentadiene in 50 ml of ether over one hour at 0°C. The mixture was then warmed to room temperature and stirred overnight. This solution was then transferred by cannula to a 0°C solution of 6.10 g (0.983 moles) of ethylene glycol and 25 g (0.32 moles) of pyridine in 150 ml of methylene chloride. This mixture was then stirred overnight while warming to room temperature. The solution was then decanted away from precipitated salts which were washed with two 50 ml portions of hexane. The organic layer was washed with 2100 ml of 5% KOH in saturated aqueous NaCl, dried over magnesium sulfate and concentrated on a rotary evaporator. The crude product was purified by chromatography on alumina by eluting first with 200 ml of hexane followed by one liter of methylene chloride. Evaporation of the methylene chloride provided 12.5 grams of EMNC.

Example 6

1,4-Butane-bis-(2-methyl-5-norbornene-2-carboxylate) (BMNC)

BMNC is prepared by first adding a solution of 15.5 g (0.148 moles) of methacryloyl chloride in 25 ml of ether to a solution of 15 g (0.23 moles) of cyclopentadiene in 25 ml of ether over one hour at 0°C. The mixture is then warmed to room temperature and stirred overnight. This solution is then transferred by cannula to a 0°C solution of 6.66 g (0.107 moles) of ethylene glycol and 20 g (0.253 moles) of pyridine in 180 ml of methylene chloride. This mixture is then stirred overnight while warming to room temperature. The solution is then decanted away from precipitated salts which are washed with two 50 ml portions of hexane. The organic layer is washed with 200 ml of 5% KOH in saturated aqueous NaCl, dried over magnesium sulfate and concentrated on a rotary evaporator. The crude product is purified by chromatography on alumina by eluting first with 100 ml of hexane followed by 600 ml of methylene chloride. Evaporation of the methylene chloride provided 12.5 grams of BMNC.

Example 7

Bis-(2-Hydroxymethyl-5-norbornene Adipate (HMNA)

A solution of 227.5 grams of adipoyl chloride in 1 liter of ether was cooled to 0°C in a 3 liter reactor. A solution of 31.7 grams of 5-hydroxymethyl-2-norbornene in 227.5 ml of pyridine was added slowly over a period of two hours. The mixture was stirred overnight and filtered. The solids were then washed with hexane which was combined with the filtrate and washed with 1 liter of dilute HCl solution, 250 ml of saturated NaCl solution and dried over magnesium sulfate. After removal of solvent and other volatiles, the crude product is purified by chromatography on alumina to give 271 grams of HMNA.

Example 8

1,4,5,8-Dimethano-1,4,4a,5,8,8a-octahydronaphthalene (DMON)

DMON is prepared by reacting norbornene with cyclopentadiene according to reaction V as follows:

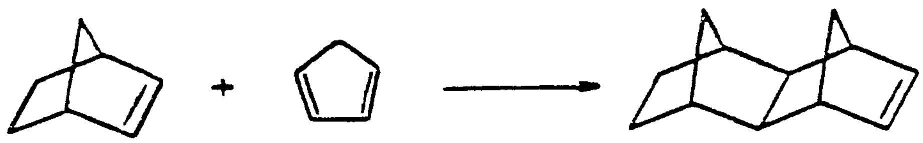

(V)

Norbornene (76 g, 0.807 moles) is weighed into a 10 oz bottle which is then capped and sparged. DCPD (54 ml, 0.439 moles) was added by syringe. The mixture was heated to 180°C for 16 hours, after which the bottle was cooled to room temperature and opened. Excess norbornene was removed by distillation after which the product was distilled under nitrogen in a pop bottle to give 41.7 g of DMON.

This adduct of cyclopentadiene and norbornene contains only one double bond and thus will not increase the crosslink density of the resulting copolymer. However, the comonomer is a tetracyclic monomer so that in the ring-opened copolymer the repeat unit in the polymer chain will contain three fused rings. These tricyclic units have considerably less free rotation, and therefore less flexibility, than DCPD so that their presence results in a stiffer polymer chain and a correspondingly higher Tg. Similar results are obtained with the correspondingly higher Tg. Similar results are obtained with the cyclopentadiene adducts of alkylnorbornenes such as 5-methylnorbornene.

Example 9

Preparation of Copolymers

Copolymers of DCPD

A tungsten catalyst is made as follows: t-butanol is stirred with 20 grams of $WCl_6$ in 70 ml of dry toluene under $N_2$ atmosphere in a t-butanol to $WCl_6$ molar ratio of 0.25 to form a 0.73 molar catalyst solution of $WCl_6$ and $WOCl_4$. The molar ratio of $WCl_6$ to $WOCl_4$ formed is about 3 to 1. 11.1 grams of nonyl phenol in 30 ml of toluene is then added, and the solution is sparged for one hour with $N_2$ to remove HCl. 10.1 grams of 2,4-pentanedione is then added by syringe, and the solution is again sparged with $N_2$ to remove HCl, for 18 hours.

An aluminum alkyl activator solution is prepared by diluting 2.00 ml (0.00376 moles) of a 1.88 M solution of diethylaluminum chloride (DEAC) with 8.00 ml of distilled toluene and 0.64 ml (0.0038 moles) of di-butyl ether.

Solutions are prepared containing measured mixtures of DCPD and DMHN. Into a 15 mm × 125 mm test tube that had been capped with a rubber septum and sparged with nitrogen is syringed 5 grams of one of the solutions of the comonomers. The aluminum alkyl activator (0.15 ml, 0.054 mmoles) is added to the monomers by syringe. Next, 0.15 ml of di-butyl ether was added. After a thermocouple probe has been inserted to measure the exotherm of the reaction, 0.19 ml (0.019 mmoles) of 0.1 M tungsten catalyst is added and the tube is quickly shaken to mix the reactants. After a short period of time the mixture polymerized into a solid infusible polymer mass. Table 1 gives values for the % insoluble gel, % swell in toluene, and Tg, as determined by differential scanning calorimetry, of the copolymers.

Table 1

| wt. % DMHN | % Gel | % Swell | Tg |
|---|---|---|---|
| 0 | 97 | 110 | 140 |
| 5 | 94 | 67 | 175 |
| 10 | 93 | 52 | 187 |
| 20 | 93 | 40 | 196 |

Examples 10 and 11

These examples describe the preparation of a copolymer of 10 wt% DMHN (as prepared in Example 1) and 90 wt% DCPD by reaction injection molding (RIM). Samples of DCPD copolymers made by RIM processing were made using a standard RIM machine supplied by Accuratio Co. of Jeffersonville, Ind. The following description illustrates the standard procedure for molding samples. First the two monomer storage tanks on the machine were closed off and inerted with nitrogen. The tanks are located on different sides of the RIM machine: the tank on the A side is the one to which the activator was later added and the tank on the B side is the one to which the catalyst was later added.

A mixture of 90% DCPD and 10% DMHN, containing 6% by weight of Stereon 720 styrene-butadiene rubber, was added to both tanks. If desired, solid fillers such as milled glass fiber or Wollastonite can be added. Sufficient diethylaluminum chloride was transferred into the A tank so that the concentration was

0.048 M and sufficient di-n-butyl ether was added so that the ether to aluminum ratio was 1.5:1. Next, sufficient tungsten catalyst solution was added to the B side tank to bring the concentration of catalyst to 0.0071 M. All transfers were done and all materials were handled in a way to preclude the entrance of oxygen or moisture into the system. The materials were then thoroughly blended in their respective tanks.

The mixing of the A stream and the B stream took place in a standard impingement type RIM mixhead. The ratio of the activator/monomer solution mixed with the catalyst/monomer solution was 1:1. The impingement mixing was accomplished by passing both the solutions through orifices 0.032″ in diameter at a flow rate approximately 80 ml/sec. This required pumping pressures of approximately 1000 psi.

The resulting mixture flows directly into a mold heated to between 50 and 60°C. The mold has a flat cavity that forms a plaque sample 10″ × 10″ × ⅛″ thick. The mold was opened and the finished plaque was removed approximately 10 to 30 seconds after the mold was filled. In Example 10, the procedure outlined above was followed to give plaques that could be removed from the mold in 15 seconds. In Example 11, 1/16″ milled glass fiber was added to the monomer solutions so that the samples contained 20% glass. These samples were made by initially slurrying the glass into both the catalyst/monomer and the activator/monomer solutions. The physical properties for these samples are shown in Table 2.

Table 2

| | Example 10 | Example 11 |
|---|---|---|
| % Glass Filler | 0 | 20 |
| Flex Modulus (kpsi) | | |
| 23°C | 224 | 421 |
| 100°C | 66 | 187 |
| Flex Strength (kpsi) | | |
| 23°C | 9.6 | 10.7 |
| 100°C | 1.4 | 2.0 |
| Plate Impact Energy (ft-lb) | | |
| 23°C | 8.4 | 9.1 |
| -29°C | 3.8 | 9.0 |

Example 12

The procedure of Example 9 is followed except that TTD (as prepared in Example 2) is used as the comonomer with DCPD. A solid infusible polymer mass was obtained. The % insoluble gel, % swell in toluene and Tg, as determined by dynamic mechanical analysis, for these copolymer samples are shown in Table 3.

Table 3

| wt. % TTD | % Gel | % Swell | Tg |
|---|---|---|---|
| 5 | 99 | 108 | |
| 10 | 99 | 103 | |
| 20 | 98 | 94 | 145 |

Examples 13—17

An aluminum alkyl activator solution is prepared by diluting 2.00 ml (0.00376 moles) of a 1.88 M solution of diethylaluminum chloride (deac) with 8.00 ml of distilled toluene. In addition, the solution of monomers is heated to 60°C immediately upon addition of the tungsten catalyst solution by placing the tube in a 60°C heating bath. The comonomer, % comonomer, % insoluble gel, % swell in toluene and Tg, as determined by dynamic mechanical analysis, for the copolymers are given in Table 4.

Table 4

| Example | Comonomer | % Comonomer | % Gel | % Swell | Tg |
|---|---|---|---|---|---|
| 13 | TPNC (Ex. 3) | 5 | 95 | 93 | 158 |
| | | 10 | 94 | 63 | |
| | | 20 | 94 | 58 | 165 |
| 14 | ENC (Ex. 4) | 5 | 95 | 95 | |
| | | 10 | 94 | 85 | |
| | | 20 | 92 | 71 | 153 |
| 15 | EMNC (Ex. 5) | 5 | 93 | 107 | |
| | | 10 | 94 | 89 | |
| | | 20 | 94 | 79 | |
| 16 | BMNC (Ex. 6) | 5 | 97 | 94 | |
| | | 10 | 97 | 90 | |
| | | 20 | 95 | 81 | 138 |
| 17 | HMNA (Ex. 7) | 5 | 98 | 100 | |
| | | 10 | 98 | 87 | |
| | | 20 | 94 | 76 | 122 |

Example 18

The procedure of Example 9 is followed except that DMON (as prepared in Example 8) is used as the comonomer with DCPD in place of DMHN. A solid infusible polymer mass is obtained in all cases. Table 5 gives the % insoluble gel, % swell in toluene, and Tg, as determined by differential scanning calorimetry for these copolymer samples.

Table 5

| % Comonomer | % Gel | % Swell | Tg |
|---|---|---|---|
| 5 | 97 | 110 | |
| 10 | 100 | 105 | 160 |
| 20 | 98 | 120 | 167 |
| 100 | 94 | 102 | 195 |

Examples 19—25

In these Examples, substantially cross-linked dicyclopentadiene polymer and copolymer products are formed. The products are formed by mixing a catalyst solution and an activator solution to form a polymerization solution that polymerizes to form the polymer products as described in Table 17. (The catalyst solution on a molar basis is tungsten catalyst in monomer.) The tungsten catalyst is made as described for Example 9. 10 ml of monomer is added to 0.30 ml of the catalyst solution. The monomer and catalyst solution is then warmed at 35°C for 24 hours while sparging with nitrogen to evaporate the toluene and phenol to form a substantially solvent free monomer solution of catalyst. The activator solution is prepared by combining under $N_2$ 8.6 ml of monomer and 0.39 ml of 1.0 M tri-n-octylaluminum in monomer.

In these Examples, the activator solution also includes 0.1 ml of bis-(2-methoxyethyl) ether. The exotherm of polymerization occurs in about 15 to 25 seconds after mixing 5.0 ml the catalyst in monomer solution to 5.0 ml of the activator in monomer solution. Both solutions are initially at 25°C. They are intimately mixed and the mixture injected into a mold.

In Examples 19 and 22 flame retardant is added to the catalyst solution prior to mixing with the activator solution. In Examples 21, 24 and 25 milled glass is added to the activator solution prior to mixing with the catalyst solution. In Examples 22—25 elastomer is added equally to both the catalyst solution and the activator solution prior to mixing.

Table 6

| Example | 19 | 20 | 21 | 22 | 23 | 24 | 25 |
|---|---|---|---|---|---|---|---|
| Activator to Catalyst ratio | 3.0 | 3.0 | 3.0 | 3.0 | 3.0 | 3.0 | 3.0 |
| Monomer weight % | | | | | | | |
| DCPD | 100 | 80 | 80 | 95 | 95 | 95 | 95 |
| DMHN (Ex. 1) | - | 20 | 20 | 5 | 5 | 5 | 5 |
| Additive parts flame retardant N,N'-ethylene-bis-tetrabromophthalimide/$Sb_2O_3$/ $NH_4BH_4$) per 100 parts monomer (by weight) | 32 | - | - | 32 | - | - | - |
| Weight % residual monomer | 0.1 | 0.3 | 0.04 | 0.4 | 0.4 | 0.05 | 0.05 |
| Tg °C | 140 | 196 | 198 | 175 | 175 | 175 | 175 |
| Weight % swell | 100 | 40 | 38 | 60 | 60 | 60 | 60 |
| Weight % gel | 98 | 93 | 99.9 | 89.5 | 89.5 | 89.9 | 89.9 |
| Flexural modulus (psi) | 380,000 | 300,000 | 576,000 | 385,000 | 245,000 | 526,000 | 546,000 |
| (KPa) | 2619 720 | 2068 200 | 3970 944 | 2654 190 | 1689 030 | 3626 244 | 3764 124 |
| Notched Izod impact strength (ft-lb/inch notch) | 2.1 | 2.0 | 2.3 | 10.5 | 8.8 | 10.2 | 8.9 |
| (J/cm) | 1,12 | 1,07 | 1,23 | 5,61 | 4,70 | 5,45 | 4,75 |
| Filler weight % 1/8 inch milled glass, | - | - | 33 | - | - | 33 | 33 |

The identity of the second elastomer has been determined to be as indicated as follows:

| Elastomer styrene-butadiene | | | | | | | |
|---|---|---|---|---|---|---|---|
| weight % butyl rubber | - | - | - | 6 | - | 6 | - |
| weight % saturated styrene butadiene-styrene triblock rubber | - | - | - | - | 10 | - | 10 |

Example 26

This Example illustrates a synthesis of 2-hydroxymethyl-5-norbornene acetate.

Into a solution of 99.2 g of 2-hydroxymethyl-5-norbornene and 50 ml of chloroform is added dropwise a solution of 84.0 g of acetic anhydride in 100 ml of chloroform. This mixture is allowed to stir overnight at room temperature, followed by heating at reflux for three hours. The cooled reaction mixture is poured into water and stirred to hydrolyze unreacted acetic anhydride. The layers are separated, the organic phase is diluted with an equal volume of hexane, and the mixture repeatedly washed with water to remove most of the pyridine. A final wash with dilute HCl solution, saturated sodium bicarbonate solution and saturated sodium chloride solution removes pyridine, acetic acid and water from the organic phase. Drying over anhydrous magnesium sulfate and removal of the solvent on a rotary evaporator affords 137 g of crude product as a faintly yellow, pleasant smelling oil. This is diluted with 2 volumes of hexane and passed through a 300 g column of neutral alumina, followed by continued hexane elution until no more material was found in the effluent. Distillation of the hexane and vacuum distillation of the residue (55°C, 0.8 mm) provides 103.1 g (84%) of the acetate as a clear, colorless oil of characteristic fruity odor; infrared spectrum: 3139, 3061, 2965, 2868, 1741, 1361, 1235, 1028, 714 $cm^{-1}$; 60 MHZ NMR ($CDCl_3$); 2.02 ($H_3CCO_2$—).

Example 27

This Example illustrates another synthesis of 2-hydroxymethyl-5-norbornene adipate.

Into a solution consisting of 62.0 g of the 5-hydroxymethyl-2-norbornene and 100 ml of pyridine under $N_2$ cooled to 0°C is added dropwise a solution of 45.7 g (36.44 ml) of distilled adipoyl chloride (107°C/2 mm) in 200 ml of chloroform. The ice bath is removed after addition was completed, and the mixture stirred overnight at room temperature. The reaction mixture is diluted with 2 volumes of hexane and repeatedly washed with dilute aqueous HCl solution to remove the pyridine. This is followed by saturated sodium bicarbonate washes, saturated NaCl solution, and drying over anhydrous magnesium sulfate. Removal of the solvent gives 95.53 g (104%) of crude product as a pleasant smelling yellow oil. The crude product is distilled under vacuum (206°/0.4 mm) to give 93.82 g (82%) of product as a nearly colorless and odorless oil. Dilution of this material with 2 volumes of hexane and elution through 250 g of neutral alumina, continued elution with hexane and solvent stripping at reduced pressure finally gave a water white product in 75% yield; infra red spectrum: 3120, 3061, 2965, 2870, 1735, 1170, 714 $cm^{-1}$.

Example 28

This Example illustrates a synthesis of methyl 5-norbornene-2-carboxylate.

In 100 ml of anhydrous ether at 0°C is mixed 30 ml of cyclopentadiene and 32 ml of methyl acrylate. The ice bath is removed and the mixture allowed to stir overnight. The solvent, unreacted methyl acrylate, and cyclopentadiene are removed at ambient temperature at reduced pressure; as less material distilled out of the mixture the pressure is gradually reduced to 0.5 mm. The desired epimeric mixture of methyl carboxylates is distilled at 42—43° and 0.5 mm; infrared spectrum: 3118, 3060, 2965, 2941, 2862, 1734, 1428, 1329, 1264, 1190, 1024, 704, $cm^{-1}$; 60 MHz NMR: endo/exo = 80/20.

Examples 29—31

Copolymers of DCPD with 2-hydroxymethyl-5-norbornene acetate, 2-hydroxymethyl-5-norbornene adipate, and methyl 5-norbornene-2-carboxylate were prepared according to the procedure of Examples 13—17.

The general procedure to determine the gel swell value of the comonomers made according to the invention is as follows: A 5 g sample of copolymer is removed from its test tube (by breaking the glass) and carefully sliced into 1—2 mm thick sections across the cylindrical axis with a band saw. The burrs are removed, each slice weighed to the nearest milligram, and strung onto a stainless steel infrared spectrum taking care to keep them in known sequence. This is done for each sample at a given comonomer feed. The wire is made into a closed loop and placed in 50 ml of toluene for each gram of copolymer. (In some cases, several loops of copolymer are placed in a single flask of toluene, but only those of common functional monomer are placed together.) The flasks are then heated to reflux for 16 hours and cooled.

Each loop is removed from the flask in turn and placed in a small crystallizing dish of fresh toluene. The slices are removed, patted dry, and weighed individually, again taking care not to disturb their sequence or to tear the swollen samples. After weighing, they are restrung and placed in a forced draft ($N_2$) oven at 135°C for 16 hours. The samples are reweighed and their gel and swell values calculated according to the following equations.

$$\text{Percent Gel} = \frac{\text{Final dried polymer weight}}{\text{Original polymer weight}} (100)$$

$$\text{Percent Swell} = \frac{\text{Swollen polymer weight} - \text{Final dried polymer weight}}{\text{Final dried polymer weight}} (100)$$

The data in the following Table 8 are based on results from reacting two samples of each set of comonomer compositions. The copolymers have percent-by-weight gel of from about 88.7 to 99.2 as shown.

Table 7

Copolymerization of Dicyclopentadiene and Functional Monomers[(a)]

| Example | Comonomer (CM) | DCPD/CM (wt%) | $T_{max}$ (°C) | Time tp T max (min) |
|---|---|---|---|---|
| 29 | $CH_2OCOCH_3$ (Ex. 26) | 95/5 | 201 | 1 3/4 |
| | | 95/5 | 190 | 1 1/4 |
| | | 90/10 | 206 | 1 1/2 |
| | | 90/10 | 202 | 1 1/2 |
| | | 80/20 | 198 | 1 1/2 |
| | | 80/20 | 198 | 1 1/2 |
| 30 | $CH_2OCOCH_2CH_2)_2$ (HMNA, Ex. 7) | 95/5 | 203 | 1 |
| | | 95/5 | 204 | 1 |
| | | 90/10 | 205 | 1 1/2 |
| | | 90/10 | 206 | 1 1/2 |
| | | 80/20 | 197 | 2 1/4 |
| | | 80/20 | 205 | 2 |
| 31 | $CO_2CH_3$ (Ex. 28) | 95/5 | 199 | 1 |
| | | 95/5 | 199 | 1 |
| | | 90/10 | 204 | 1 |
| | | 90/10 | 201 | 1 |
| | | 80/20 | 203 | 1 1/4 |
| | | 80/20 | 206 | 1 1/4 |

Table 8

Gel-Swell Values for Copolymers of DCPD and Functional Monomers

| Example | Comonomer (CM) | DCPD/CM (wt%) | Swell (Weight %) | Gel (Weight %) |
|---|---|---|---|---|
| 29 | $CH_2OCOCH_3$ (Ex. 26) | 95/5 | 153 | 95.3 |
| | | 95/5 | 152 | 92.8 |
| | | 90/10 | 184 | 95.0 |
| | | 90/10 | 144 | 93.8 |
| | | 80/20 | 213 | 89.1 |
| | | 80/20 | 190 | 88.7 |
| 30 | $CH_2OCOCH_2CH_2)_2$ (HMNA, Ex. 7) | 95/5 | 95 | 98.2 |
| | | 95/5 | 105 | 98.6 |
| | | 90/10 | 86 | 97.9 |
| | | 90/10 | 88 | 97.6 |
| | | 80/20 | 77 | 94.8 |
| | | 80/20 | 75 | 93.8 |
| 31 | $CO_2CH_3$ (Ex. 28) | 95/5 | 122 | 96.0 |
| | | 95/5 | 113 | 94.7 |
| | | 90/10 | 200 | 97.3 |
| | | 90/10 | 127 | 98.9 |
| | | 80/20 | 186 | 97.0 |
| | | 80/20 | 245 | 99.2 |

**Claims**

1. A reactant composition containing a dicyclopentadiene primary monomer and a metathesis-catalyst system for polymerizing norbornene-type cycloolefins that includes a monomer-soluble or solvent-soluble tungsten compound as the catalyst and a dialkylaluminum compound as the activator, characterized in that it comprises at least about 5% by weight of a norbornene-type cycloolefin comonomer that in its polymeric state would have a glass transition temperature (Tg) that is higher than the Tg that the dicyclopentadiene homopolymer would have after the polymerization, or that has two or more reactive double bonds that will open during the polymerization, so that the number of cross-links will be increased, or that contains four or more rings in the monomer structure, or that has a polar substituent in the five-position of the norbornene structure, the substituent being a pendant group that contains one or more hetero-atoms.

2. A reactant composition as claimed in claim 1, further characterized in that the glass transition temperature (Tg) of a homopolymer made from the cycloolefin comonomer would have a glass transition temperature (Tg) that is higher than the Tg of a homopolymer made from the primary monomer.

3. A reactant composition as claimed in claim 1, further characterized in that the cycloolefin comonomer has two or more reactive double bonds that will open during the polymerization.

4. A reactant composition as claimed in claim 2, further characterized in that the reactive double bonds are in norbornene-type rings.

5. A reactant composition as claimed in claim 1, further characterized in that the cycloolefin comonomer has a structure containing four or more rings that increase the rigidity of the backbone chain of the polymer and its resistance to folding or rotation.

6. A reactant composition as claimed in claim 1, further characterized in that the polar substituent in the five-position of the norbornene structure is an esterified hydroxyl or carboxyl group that links two or more norbornene ring structures.

7. A reactant composition as claimed in claim 6, further characterized in that the polar substituent is a Diels-Alder adduct of cyclopentadiene with a polyfunctional acrylate or adipate.

8. A method of moderating the rate of polymerization of a dicyclopentadiene monomer using a metathesis-catalyst system that includes a monomer-soluble or solvent-soluble tungsten compound as the catalyst and an alkyl-aluminum compound as the activator, characterized in that the dicyclopentadiene is polymerized with at least about 5% by weight of a norbornene-type cycloolefin comonomer that has a polar substituent in the five-position of the norbornene structure, the substituent being a pendant group that contains one or more hetero-atoms, the polar comonomer being present in a concentration effective to increase the induction time before polymerization.

9. A method of moderating the rate of polymerization of a dicyclopentadiene monomer as claimed in claim 8, further characterized in that the polar substituent in the five-position of the norbornene structure is an esterified hydroxyl or carboxyl group that links two or more norbornene ring structures.

10. A method of moderating the rate of polymerization of a dicyclopentadiene monomer as claimed in claim 9, further characterized in that the polar comonomer is a Diels-Alder adduct of cyclopentadiene with a polyfunctional acrylate or adipate.

11. A thermoset copolymer of a dicyclopentadiene primary monomer component and at least about 5% by weight of a cycloolefin comonomer component, characterized in that the comonomeric component is a norbornene-type cycloolefin, and the copolymer has a glass transition temperature (Tg) that is higher than the Tg that the primary monomer component would have as a homopolymer.

**Patentansprüche**

1. Reaktionsmittelzusammensetzung enthaltend ein Dicyclopentadien primäres Monomer und ein Metathese-Katalysator-System zur Polymerisation von Cycloolefinen vom Norbornen-Typ, das eine Monomer-Lösliche oder Lösungsmittel-lösliche Wolframverbindung als Katalysator und ein Dialkylaluminiumverbindung als Aktivator umfaßt, dadurch gekennzeichnet, daß sie mindestens etwa 5 Gew.-% eines Cycloolefin-Comonomers vom Norbornen-Typ umfaßt, das in seinem polymeren Zustand eine Glasübergangstemperatur (Tg) haben würde, die höher ist als die Tg, die das Dicyclopentadienhomopolymer nach der Polymerisation haben würde, oder das zwei oder mehr reaktive Doppelbindungen hat, die sich während der Polymerisation öffnen werden, so daß die Zahl der Querverbindungen erhöht werden wird oder, das vier oder mehr Ringe in der Monomerstruktur hat oder, das einen polaren Substituenten in der fünf-Position der Norbornen-Struktur hat, wobei der Substituent eine Seitengruppe ist, die ein oder mehrere Heteroatome enthält.

2. Reaktionsmittelzusammensetzung nach Anspruch 1, weiterhin dadurch gekennzeichnet, daß die Glasübergangstemperatur (Tg) eines Homopolymers, hergestellt aus dem Cycloolefin-Comonomer, eine Glasübergangstemperatur (Tg) haben würde, die höher ist als die Tg eines aus dem primären Monomer hergestellten Homopolymers.

3. Reaktionsmittelzusammensetzung nach Anspruch 1, weiterhin dadurch gekennzeichnet, daß das Cycloolefin-Comonomer zwei oder mehr reaktive Doppelbindungen hat, die sich während der Polymerisation öffnen werden.

4. Reaktionsmittelzusammensetzung nach Anspruch 2, weiterhin dadurch gekennzeichnet, daß die

reaktiven Doppelbindungen in den Ringen vom Norbornen-Typ sind.

5. Reaktionsmittelzusammensetzung nach Anspruch 1, weiterhin dadurch gekennzeichnet, daß das Cycloolefin-Comonomer eine Struktur enthaltend vier oder mehr Ringe hat, die die Steifheit der Rückgratkette des Polymers und deren Beständigkeit gegen Faltung oder Rotation erhöht.

6. Reaktionsmittelzusammensetzung nach Anspruch 1, weiterhin dadurch gekennzeichnet, daß der polare Substituent in der fünf-Position der Norbornen-Struktur eine veresterte Hydroxyl- oder Carboxylgruppe ist, die zwei oder mehr Norbornen-Ringstrukturen verbindet.

7. Reaktionsmittelzusammensetzung nach Anspruch 6, weiterhin dadurch gekennzeichnet, daß der polare Substituent ein Diels-Alder-Addukt von Cyclopentadien mit einem polyfunktionellen Acrylat oder Adipinat ist.

8. Verfahren zum Moderieren der Polymerisationsrate eines Dicyclopentadienmonomers unter Verwendung eines Metathese-Katalysator-Systems, das eine Monomer-lösliche oder Lösungsmittel-lösliche Wolframverbindung als Katalysator und eine Alkylaluminiumverbindung als Aktivator umfaßt, dadurch gekennzeichnet, daß das Dicyclopentadien mit mindestens etwa 5 Gew.-% eines Cycloolefin-Comonomers vom Norbornen-Typ polymerisiert wird, das einen polaren Substituenten in der fünf-Position der Norbornen-Struktur hat, wobei der Substituent eine Seitengruppe ist, die ein oder mehr Heteroatome enthält, wobei das polare Comonomer in einer wirksamen Konzentration um die Induktionszeit vor der Polymerisation zu erhöhen, vorhanden ist.

9. Verfahren zum Moderieren der Polymerisationsrate eines Dicyclopentadienmonomers nach Anspruch 8, weiterhin dadurch gekennzeichnet, daß der polare Substituent in der fünf-Position der Norbornen-Struktur eine veresterte Hydroxyl- oder Carboxylgruppe ist, die zwei oder mehr Norbornen-Ringstrukturen verbindet.

10. Verfahren zum Moderieren der Polymerisationsrate eines Dicyclopentadien-Monomers nach Anspruch 9, weiterhin dadurch gekennzeichnet, daß das polare Comonomer ein Diels-Alder-Addukt von Cyclopentadien mit einem polyfunktionellen Acrylat oder Adipinat ist.

11. Duroplastisches Copolymer einer Dicyclopentadien primären Monomer-Komponente und mindestens etwa 5 Gew.-% einer Cycloolefin-Comonomer-Komponente, dadurch gekennzeichnet, daß die comonomerische Komponente ein Cycloolefin vom Norbornen-Typ ist und das Copolymer eine Glasübergangstemperatur (Tg) hat, die höher ist als die Tg, die die primäre Monomerkomponente als ein Homopolymer haben würde.

**Revendications**

1. Composition réactive contenant un monomère principal de dicyclopentadiène, et un système de catalyseur de double décomposition pour polymériser des cyclooléfines de type norbornène qui comprend un composé de tungstène soluble dans le monomère ou soluble dans un solvant comme catalyseur et un composé de dialkylaluminium comme activateur, caractérisée en ce qu'elle comprend au moins 5% en poids d'un comonomère de cyclooléfine de type norbornène qui, dans son état polymère, aurait une température de transition vitreuse (Tg) qui est supérieure à la Tg qu'aurait l'homopolymère de dicyclopentadiène après la polymérisation, ou qui a deux ou plusieurs doubles liaisons réactives qui s'ouvrent pendant la polymérisation, si bien que le nombre de réticulations est accru, ou qui contient 4 noyaux ou plus dans la structure de monomère, ou qui a un substituant polaire dans la position 5 de la structure norbornène, le substituant étant un groupe pendant qui contient un ou plusieurs hétéroatomes.

2. Composition réactive selon la revendication 1, caractérisée en outre en ce que la température de transition vitreuse (Tg) d'un homopolymère préparé à partir du comonomère de cyclooléfine aurait une température de transition vitreuse (Tg) qui est supérieure à la Tg d'un homopolymère préparé à partir du monomère principal.

3. Composition réactive selon la revendication 1, caractérisée en outre en ce que le comonomère de cyclooléfine a deux ou plusieurs doubles liaisons réactives qui s'ouvrent pendant la polymérisation.

4. Composition réactive selon la revendication 2, caractérisée en outre en ce que les doubles liaisons réactives sont dans des noyaux de type norbornène.

5. Composition réactive selon la revendication 1, caractérisée en outre en ce que le comonomère de cyclooléfine a une structure contenant quatre noyaux ou plus qui augmentent la rigidité de la chaîne d'ossature du polymère et sa résistance au pliage ou à la rotation.

6. Composition réactive selon la revendication 1, caractérisée en outre en ce que le substituant poliare en position 5 de la structure norbornène est un groupe hydroxyle ou carboxyle estérifée qui relie deux ou plusieurs structures cycliques de norbornène.

7. Composition réactive selon la revendication 6, caractérisée en outre en ce que le substituant polaire est un produit d'addition de Diels-Alder de cyclopentadiène avec un acrylate ou adipate polyfonctionnel.

8. Procédé de modération de la vitesse de polymérisation d'un monomère de dicyclopentadiène utilisant un système de catalyseur de double décomposition qui comprend un composé de tungstène soluble dans le monomère ou soluble dans un solvant comme catalyseur et un composé d'alkylaluminium comme activateur, caractérisé en ce que l'on polymérise le dicyclopentadiène avec au moins environ 5% en poids d'un comonomère de cyclooléfine de type norbornène qui a un substituant polaire en position 5 de la structure norbornène, le substituant étant un groupe pendant qui contient un ou plusieurs

hétéroatomes, le comonomère polaire étant présent à une concentration efficace pour accroître le temps d'induction avant la polymérisation.

9. Procédé de modération de la vitesse de polymérisation d'un monomère de dicyclopentadiène selon la revendication 8, caractérisé en outre en ce que le substituant polaire en position 5 de la structure norbornène est un groupe hydroxyle ou carboxyle estérifié qui relie deux ou plusieurs structures cycliques norbornène.

10. Procédé de modération de la vitesse de polymérisation d'un monomère de dicyclopentadiène selon la revendication 9, caractérisé en outre en ce que le comonomère polaire est un produit d'addition de Diels-Alder de cyclopentadiène avec un acrylate ou un adipate polyfonctionnel.

11. Copolymère thermodurci d'un composant monomère principal, le dicyclopentadiène, et d'au moins environ 5% en poids d'un composant comonomère de cyclooléfine, caractérisé en ce que le composant comonomère est une cyclooléfine de type norbornène, et en ce que le copolymère a une température de transition vitreuse (Tg) qui est supérieure à la Tg qu'aurait le composant monomère principal en tant qu'homopolymère.